# EUROPÄISCHE PATENTSCHRIFT

(11) **EP 3 010 752 B1**
(45) Veröffentlichungstag und Bekanntmachung des Hinweises auf die Patenterteilung: **17.04.2019**
(21) Anmeldenummer: 14732845.4
(22) Anmeldetag: 13.06.2014
(51) Int. Cl.: B60N 2/36, B60N 2/015, B60N 2/68, E05B 79/04, E05B 79/08

(54) **FAHRZEUGSITZ MIT VERRIEGELUNGSEINHEIT**
VEHICLE SEAT WITH LOCKING UNIT
SIÈGE DE VÉHICULE AVEC UNITÉ DE VERROUILLAGE

(30) Priorität: 18.06.2013 DE 102013211332
(43) Veröffentlichungstag der Anmeldung: 27.04.2016
(73) Patentinhaber: Adient Luxembourg Holding S.à r.l., 1855 Luxembourg (LU)
(72) Erfinder: HANDL, Patrick, 50739 Köln (DE); VEDDER, Andreas, 42781 Haan (DE); GORDEENKO, Igor, 50226 Frechen (DE); MOELLER, Uwe, 42697 Solingen (DE); DEMIRCI, Oezkan, 44795 Bochum (DE); POHLSCHEIDT, Dennis, 53844 Troisdorf (DE); CHRISTALL, Martin, 42659 Solingen (DE)
(74) Vertreter: Liedhegener, Ralf
(86) Internationale Anmeldenummer: PCT/EP2014/062307
(87) Internationale Veröffentlichungsnummer: WO 2014/202468

(56) Entgegenhaltungen:
- EP-A2- 2 657 068
- WO-A1-02/078998
- WO-A2-2004/069580
- US-A- 4 097 078

## Beschreibung

Die Erfindung betrifft einen Fahrzeugsitz mit einer Verriegelungseinheit mit den Merkmalen des Oberbegriffs des Anspruchs 1.

### Stand der Technik

Aus der DE 10 2008 051 832 A1 ist eine Verriegelungseinheit für einen Fahrzeugsitz bekannt. Eine derartige Verriegelungseinheit umfasst eine schwenkbar gelagerte Drehfalle zum Verriegeln mit einem Bolzen. Eine um eine andere Schwenkachse schwenkbar gelagerte Rastklinke sichert die Drehfalle im verriegelten Zustand. Ein als Toleranzausgleichsklinke bezeichnetes Spannelement übt auf die Drehfalle ein schließendes Moment aus und eliminiert auf diese Art ein zwischen der Drehfalle und dem Bolzen vorhandenes Spiel.

Aus der DE 20 2011 100 040 U1 ist ebenfalls eine Verriegelungseinheit für einen Fahrzeugsitz bekannt. Die Drehfalle dieser Verriegelungseinheit weist eine von der Kreisform abweichende, annähernd langlochförmige Ausnehmung auf, mittels welcher sie auf einer Buchse oder einem Lagerbolzen schwenkbar gelagert ist.

Derartige Verriegelungseinheiten dienen beispielsweise zur Verriegelung einer Rückenlehne eines Fahrzeugsitzes an einem Sitzteil und/oder an einer Karosserie oder Struktur eines Fahrzeugs oder zur Verriegelung des Fahrzeugsitzes an der Karosserie oder Struktur des Fahrzeugs. Auch Motorhauben, Heckklappen oder Türen von Fahrzeugen lassen sich mit solchen Verriegelungseinheiten mit der Karosserie oder Struktur des Fahrzeugs verriegeln.

Aus der DE 10 2008 033 304 A1 ist ein weiterer Fahrzeugsitz mit einer Verriegelungseinheit bekannt. Die Verriegelungseinheit ist dabei an einem Strukturteil, insbesondere einer Rückenlehne des Fahrzeugsitzes befestigt und dient zur Verriegelung der Rückenlehne mit einer Struktur des Fahrzeugs, beziehungsweise dessen Karosserie. Dazu weist die Verriegelungseinheit eine als Klinke bezeichnete Drehfalle auf, welche im verriegelten Zustand der Verriegelungseinheit einen an der Struktur des Fahrzeugs befestigten Verriegelungsbolzen umgreift.

Die Verriegelungseinheit weist zwei Lagerbolzen auf, welche der schwenkbaren Lagerung der Drehfalle sowie von zwei Sicherungselementen, welche zur Sicherung der Drehfalle im verriegelten Zustand vorgesehen sind, dienen. Die beiden Lagerbolzen dienen auch der Befestigung der Verriegelungseinheit an dem Strukturteil des Fahrzeugsitzes und sind annähernd hohlzylindrisch ausgebildet. Zur Befestigung der Verriegelungseinheit an dem Strukturteil des Fahrzeugsitzes sind ferner zwei Schrauben vorgesehen, welche je einen der beiden Lagerbolzen durchgreifen und in das Strukturteil oder eine zusätzliche Mutter eingeschraubt sind. In der DE 103 08 678 A1 ist eine Verriegelungseinheit für Kraftfahrzeug-Fondsitzlehnen offenbart. Auch diese Verrieglungseinheit weist zwei hohlzylindrisch ausgebildete Lagerbolzen auf. Zur Befestigung der Verriegelungseinheit an der Lehnenstruktur sind zwei Schrauben vorgesehen, welche die Lagerbolzen durchragen.

Aus der WO 2002/078998 A1 ist eine Verriegelungsvorrichtung für einen Fahrzeugsitz bekannt, welche wenigstens einen ersten Gehäuseteil und wenigstens eine Lagerstelle zur Lagerung wenigstens eines drehbaren Elementes aufweist. Die Lagerstelle ist als ein durch Umformen hergestellter erster Durchzug einstückig am ersten Gehäuseteil ausgebildet.

Aus der WO 2004/069580 A2 ist eine Verriegelungsvorrichtung für einen Fahrzeugsitz bekannt, welche ein offenes Gehäuse, eine schwenkbar am Gehäuse gelagerte Klinke zum Verriegeln mit einem Gegenelement und wenigstens ein ebenfalls schwenkbar am Gehäuse gelagertes Sicherungselement aufweist. Das Sicherungselement sichert durch Zusammenwirken mit der Klinke einen verriegelten Zustand. Die Verriegelungsvorrichtung ist an einem Strukturteil anbringbar, wobei das Strukturteil den Deckel zum weitgehenden Schließen des Gehäuses bildet.

Aus der US 4,097,078 A ist eine Verriegelungsvorrichtung für ein Kraftfahrzeug bekannt, welche ein Schlossgehäuse mit einem Verriegelungsmechanismus aufweist. Das Schlossgehäuse ist von dem Halter durch eine Türplatte getrennt, wobei das Schlossgehäuse und der Halter mittels Schrauben durch die Türplatte miteinander verbunden sind.

### Aufgabe

Der Erfindung liegt die Aufgabe zu Grunde, einen Fahrzeugsitz mit einer Verriegelungseinheit der eingangs genannten Art zu verbessern, insbesondere die Festigkeit und Belastbarkeit der Verbindung zwischen dem Strukturteil und der Verriegelungseinheit zu erhöhen.

### Lösung

Diese Aufgabe wird erfindungsgemäß durch einen Fahrzeugsitz mit den Merkmalen des Anspruches 1 gelöst.

Vorteilhafte Ausgestaltungen, welche einzeln oder in Kombination miteinander eingesetzt werden können, sind Gegenstand der Unteransprüche.

Ein gattungsgemäßer Fahrzeugsitz umfasst ein Strukturteil, insbesondere eine Rückenlehne, welches ein Schlossanbindungsblech aufweist, und eine an dem Schlossanbindungsblech befestigte Verriegelungseinheit, wobei die Verriegelungseinheit mindestens einen Lagerbolzen mit einer Durchgangsöffnung aufweist, welche von einem Befestigungsmittel durchragt wird, wobei der Lagerbolzen einen ersten axialen Abschnitt mit einem ersten Außendurchmesser und einen zweiten axialen Abschnitt mit einem zweiten Außendurchmesser aufweist, wobei der zweite Außendurchmesser kleiner ist als der erste Außendurchmesser, wobei der mindestens eine Lagerbolzen in eine Befestigungsöffnung des Schlossanbindungsblechs hinein ragt.

Erfindungsgemäß ist dabei vorgesehen, dass die Verriegelungseinheit eine Seitenplatte aufweist, welche an dem Schlossanbindungsblech anliegt, und welche mindestens eine Lagerbohrung umfasst, in welche der erste axiale Abschnitt eingesetzt ist, wobei um die Lagerbohrung herum ein Hohlzylinder angeordnet ist, welcher sich in Richtung von dem Schlossanbindungsblech weg erstreckt, und welcher den ersten axialen Abschnitt zumindest teilweise umschließt.

Dadurch, dass der mindestens eine Lagerbolzen in eine Befestigungsöffnung des Schlossanbindungsblechs hinein ragt, übernehmen auch der Lagerbolzen und das Schlossanbindungsblech Belastungen, die auf die Verriegelungseinheit wirken, insbesondere im Crashfall auftretende Scherspannungen. Somit ist die Lastaufnahmefähigkeit der Verbindung zwischen dem Strukturteil und der Verriegelungseinheit erhöht. Ferner ist auch die Montage der Verriegelungseinheit an dem Schlossanbindungsblech vereinfacht, da die Befestigungsöffnung des Schlossanbindungsblechs eine Führung für den Lagerbolzen darstellt.

Der zweite axiale Abschnitt mit dem zweiten Außendurchmesser bildet somit eine Stufe bezüglich des ersten axialen Abschnitts mit dem ersten Außendurchmesser.

Dabei ragt der zweite axialen Abschnitt vorteilhaft in die Befestigungsöffnung des Schlossanbindungsblechs hinein. Das Schlossanbindungsblech liegt dann auf der von dem zweiten axialen Abschnitt gebildeten Stufe auf und ist somit in axialer Richtung fixiert.

Wenn der zweite Außendurchmesser, zumindest annähernd, dem Innendurchmesser der Befestigungsöffnung entspricht, ist die Verriegelungseinheit in radialer Richtung formschlüssig an dem Schlossanbindungsblech festgelegt, wodurch die Montage weiter vereinfacht und die Festigkeit erhöht wird.

Gemäß einer vorteilhaften Ausgestaltung der Erfindung weist der Lagerbolzen einen dritten axialen Abschnitt mit einem dritten Außendurchmesser auf, wobei der dritte Außendurchmesser kleiner ist als der erste Außendurchmesser. Der dritte axiale Abschnitt mit dem dritten Außendurchmesser bildet somit eine weitere Stufe bezüglich des ersten axialen Abschnitts mit dem ersten Außendurchmesser. Vorzugsweise ist der erste axiale Abschnitt in axialer Richtung zwischen dem zweiten axialen Abschnitt und dem dritten axialen Abschnitt angeordnet. Dann kann der dritte axiale Abschnitt in eine Lagerbohrung einer dem Schlossanbindungsblech gegenüberliegenden Seitenplatte der Verriegelungseinheit hinein ragen. Dann liegt die Seitenplatte auf der von dem dritten axialen Abschnitt gebildeten Stufe auf und ist somit in axialer Richtung fixiert.

Wenn die Innendurchmesser der axialen Abschnitte gleich sind ist die Herstellung des Lagerbolzens verhältnismäßig einfach.

Vorteilhaft dringt der dritte axiale Abschnitt dabei in eine Lagerbohrung in einer dem Schlossanbindungsblech abgewandten Seitenplatte der Verriegelungseinheit ein. Die Länge des dritten axialen Abschnitts ist vorzugsweise größer ist als die Dicke der dem Schlossanbindungsblech abgewandten Seitenplatte, so dass der dritte axiale Abschnitt die dem Schlossanbindungsblech abgewandten Seitenplatte durchragt.

Vorzugsweise weist der erste axiale Abschnitts in einem zentralen Bereich eine flanschartige Erweiterung auf, deren Außendurchmesser größer ist als der erste Außendurchmesser, wobei die dem Schlossanbindungsblech abgewandte Stirnseite des Hohlzylinders an der flanschartigen Erweiterung anliegt. Die Seitenplatte ist dann in axialer Richtung zwischen der flanschartigen Erweiterung und dem Schlossanbindungsblech fixiert.

Eine Feder ist um den Hohlzylinder herum gelegt, welche eine Drehfalle der Verriegelungseinheit vorspannt.

Das Befestigungsmittel ist vorzugsweise als Schraube ausgeführt, welche einen Kopf und einen Schaft aufweist.

Der Schaft der Schraube durchgreift dabei den Lagerbolzen und das Schlossanbindungsblech.

### Figuren und Ausführungsformen der Erfindung

Im Folgenden ist die Erfindung anhand von einem in den Figuren dargestellten vorteilhaften Ausführungsbeispiel näher erläutert. Die Erfindung ist jedoch nicht auf dieses Ausführungsbeispiel beschränkt. Es zeigen:

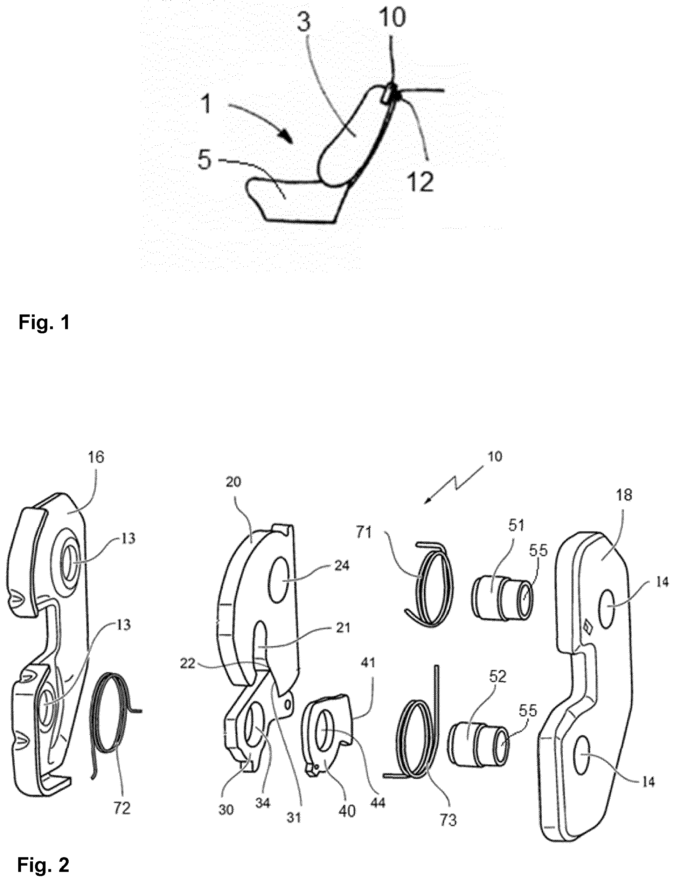

- Fig. 1:: eine schematisierte Darstellung eines Fahrzeugsitzes,
- Fig. 2:: eine Explosionsdarstellung einer Verriegelungseinheit gemäß dem Stand der Technik,

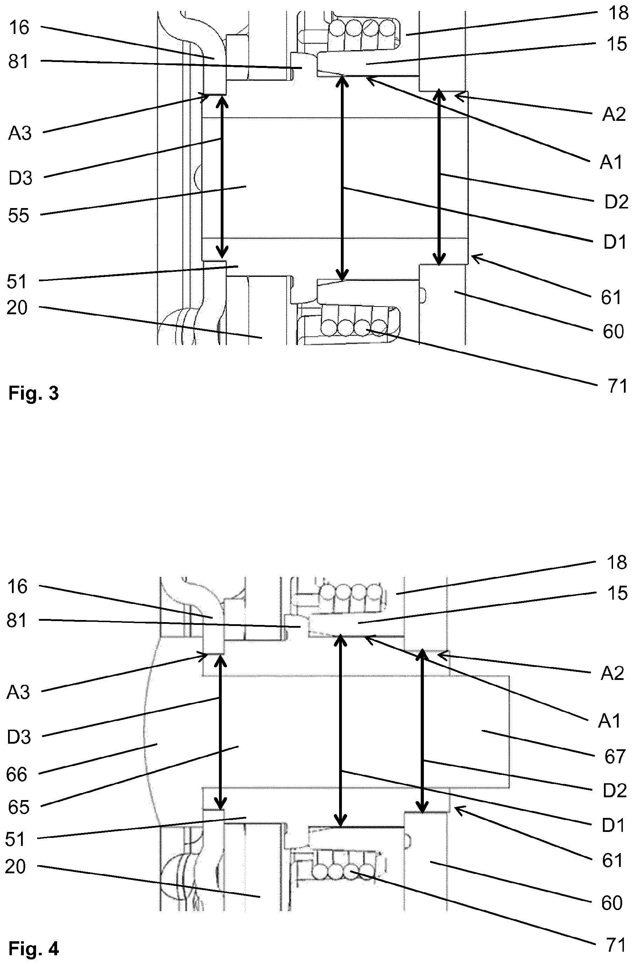

- Fig. 3:: einen Schnitt durch einen Lagerbolzen einer erfindungsgemäßen Verriegelungseinheit und
- Fig. 4:: den Lagerbolzen der Verriegelungseinheit nach Fig. 3 mit einem Befestigungsmittel.

In einem Kraftfahrzeug ist eine Verriegelungseinheit 10 zur Anbindung eines Strukturteils, vorliegend einer Rückenlehne 3, eines Fahrzeugsitzes 1, insbesondere eines Rücksitzes, an einer Fahrzeugstruktur vorgesehen. Die Rückenlehne 3 ist dabei von einer Gebrauchsstellung in eine Nichtgebrauchsstellung schwenkbar an einem Sitzteil 5 angebracht.

Die Verriegelungseinheit 10 ist auch an anderen Stellen einsetzbar, beispielsweise zur Befestigung des Sitzteils 5 des Fahrzeugsitzes 1 an der Bodenstruktur des Kraftfahrzeugs oder in einem Türschloss.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Verriegelungseinheit 10 weist ein Schlossgehäuse auf, welches eine erste Seitenplatte 16 und eine zweite Seitenplatte 18 umfasst. Die Grundflächen der Seitenplatten 16, 18 sind vorliegend weitgehend flach ausgestaltet und in einer durch die Fahrtrichtung und die Vertikalrichtung definierten Ebene angeordnet, also senkrecht zur Querrichtung.

Die erste Seitenplatte 16 umfasst zwei vorliegend kreisrund ausgeführte erste Lagerbohrungen 13, und die zweite Seitenplatte 18 umfasst zwei vorliegend kreisrund ausgeführte zweite Lagerbohrungen 14. Um die zweiten Lagerbohrungen 14 herum ist jeweils ein Hohlzylinder 15 angeordnet, welcher sich in Richtung auf die erste Seitenplatte 16 hin erstreckt. Der Hohlzylinder 15 ist vorliegend einstückig mit der zweiten Seitenplatte 18 ausgeführt und als Kragenzug ausgebildet. Es ist auch denkbar, den Hohlzylinder 15 als separate Hülse auszubilden.

Die erste Seitenplatte 16 und die zweite Seitenplatte 18 bilden eine Aufnahme aus, welche sich in Richtung eines Verriegelungsbolzens 12 öffnet, um diesen zum Verriegeln aufzunehmen. Dabei ist die Verriegelungseinheit 10 vorliegend an der Rückenlehne 3 und der Verriegelungsbolzen 12 an der Fahrzeugstruktur befestigt. Es ist auch denkbar, dass die Verriegelungseinheit 10 an der Fahrzeugstruktur und der Verriegelungsbolzen 12 an der Rückenlehne 3 befestigt ist. Der von der Aufnahme aufzunehmende Abschnitt des Verriegelungsbolzens 12 verläuft in der Regel horizontal in Querrichtung.

Eine Drehfalle 20 ist auf einem ersten Lagerbolzen 51 schwenkbar gelagert. Die Drehfalle 20 weist dazu ein Drehfallenloch 24 auf, welches vorliegend als kreisrunde Öffnung ausgebildet ist, und welches von dem ersten Lagerbolzen 51 durchdrungen ist. Die Drehfalle 20 weist ferner zum Zusammenwirken mit dem Verriegelungsbolzen 12 ein Hakenmaul 21 auf. Mittels einer ersten Feder 71 ist die Drehfalle 20 in Öffnungsrichtung vorgespannt.

Die Drehfalle 20 weist eine Funktionsfläche 22 auf, welche das Hakenmaul 21 teilweise seitlich begrenzt. Im verriegelten Zustand weist die Funktionsfläche 22 näherungsweise in Richtung eines zweiten Lagerbolzens 52, welcher parallel zu dem ersten Lagerbolzen 51 angeordnet ist und somit ebenfalls in Querrichtung verläuft. Die Funktionsfläche 22 ist vorliegend eben ausgebildet, kann aber beispielsweise auch kreisbogenförmig gekrümmt und konvex oder konkav ausgebildet sein.

Auf der dem Drehfallenloch 24 abgewandten Seite des Hakenmauls 21, der Funktionsfläche 22 gegenüber liegend, ist das Hakenmaul 21 von einer Nase der Drehfalle 20 seitlich begrenzt.

Die Drehfalle 20 weist einen Grundkörper auf, welcher in axialer Richtung von je einer flachen Grundfläche begrenzt ist. Die Breite der Funktionsfläche 22 entspricht der Dicke des Grundkörpers der Drehfalle 20, also der Ausdehnung des Grundkörpers in axialer Richtung.

Der erste Lagerbolzen 51 ist in eine erste Lagerbohrung 13 der ersten Seitenplatte 16 und in eine zweite Lagerbohrung 14 der zweiten Seitenplatte 18 eingesetzt und steht von den Grundflächen der Seitenplatten 16, 18 senkrecht ab. Der erste Lagerbolzen 51 verläuft somit horizontal in Querrichtung. Auch der zweite Lagerbolzen 52 ist in eine erste Lagerbohrung 13 der ersten Seitenplatte 16 und in eine zweite Lagerbohrung 14 der zweiten Seitenplatte 18 eingesetzt und steht von den Grundflächen der Seitenplatten 16, 18 senkrecht ab. Der zweite Lagerbolzen 52 verläuft somit ebenfalls horizontal in Querrichtung.

Die Verriegelungseinheit 10 ist vorliegend an einem Schlossanbindungsblech 60, welches ein Teil der Rückenlehne 3 ist, befestigt, vorliegend angeschraubt. Das Schlossanbindungsblech 60 ist weitgehend flach ausgestaltet und erstreckt sich in einer Ebene senkrecht zur Querrichtung. Dabei liegt die zweite Seitenplatte 18 der Verriegelungseinheit 10 an dem Schlossanbindungsblech 60 an, während die erste Seitenplatte 16 von dem Schlossanbindungsblech 60 abgewandt liegt.

Der erste Lagerbolzen 51 ist annähernd hohlzylindrisch ausgebildet und weist eine in axialer Richtung verlaufende Durchgangsöffnung 55 mit einem annähernd konstanten Innendurchmesser auf.

In einem ersten axialen Abschnitt A1 weist der erste Lagerbolzen 51 einen ersten Außendurchmesser D1 auf. Der erste axiale Abschnitt A1 erstreckt sich, beginnend an dem Schlossanbindungsblech 60, von diesem weg in axialer Richtung bis hin zu der ersten Seitenplatte 16. In einem zentralen Bereich des ersten axialen Abschnitts A1 weist der erste Lagerbolzen 51 vorliegend eine flanschartige Erweiterung 81 auf, deren Außendurchmesser größer ist als der erste Außendurchmesser D1.

Der erste axiale Abschnitt A1 ist in eine zweite Lageröffnung 14 der zweiten Seitenplatte 18 eingesetzt und wird dabei von dem Hohlzylinder 15 umschlossen. Die dem Schlossanbindungsblech 60 gegenüberliegende Stirnseite des Hohlzylinders 15 liegt dabei an der flanschartigen Erweiterung 81 des ersten axialen Abschnitts A1 an. Die erste Feder 71 ist um den Hohlzylinder 15 herum gelegt.

Auf der dem Hohlzylinder 15 abgewandten Seite der flanschartigen Erweiterung 81 liegt die Drehfalle 20, welche auf dem ersten axialen Abschnitt A1 gelagert ist, vorliegend mit geringem Spiel in Axialrichtung, an.

In einem zweiten axialen Abschnitt A2 weist der erste Lagerbolzen 51 einen zweiten Außendurchmesser D2 auf. Der zweite Außendurchmesser D2 ist dabei vorliegend kleiner als der erste Außendurchmesser D1 des ersten axialen Abschnitts A1. Der zweite axiale Abschnitt A2 schließt an den ersten axialen Abschnitt A1 an und erstreckt sich in entgegengesetzter Richtung, also von der zweiten Seitenplatte 18 weg. Es ist auch denkbar, dass der zweite Außendurchmesser D2 gleich groß ist wie der erste Außendurchmesser D1.

Der zweite axiale Abschnitt A2 dringt in eine dafür vorgesehene Befestigungsöffnung 61 des Schlossanbindungsblechs 60 ein. Der Innendurchmesser der Befestigungsöffnung 61 entspricht dabei dem zweiten Außendurchmesser D2 des zweiten axialen Abschnitts A2. Im vorliegenden Ausführungsbeispiel durchragt der zweite axiale Abschnitt A2 das Schlossanbindungsblech 60. Die Länge des zweiten axialen Abschnitts A2 ist also vorliegend größer als die Dicke des Schlossanbindungsblechs 60.

In einem dritten axialen Abschnitt A3, welcher an dem dem zweiten axialen Abschnitt A2 abgewandten Ende des ersten axialen Abschnitts A1 an diesen anschließt, weist der erste Lagerbolzen 51 einen dritten Außendurchmesser D3 auf. Der dritte Außendurchmesser D3 ist dabei vorliegend kleiner als der erste Außendurchmesser D1 des ersten axialen Abschnitts A1. Es ist auch denkbar, dass der dritte Außendurchmesser D3 gleich groß ist wie der erste Außendurchmesser D1.

Der dritte axiale Abschnitt A3 dringt in eine der Lagerbohrungen 13 der ersten Seitenplatte 16 ein. Der Innendurchmesser dieser Lagerbohrung 13 entspricht dabei annähernd dem dritten Außendurchmesser D3 des dritten axialen Abschnitts A3. Im vorliegenden Ausführungsbeispiel durchragt der dritte axiale Abschnitt A3 die erste Seitenplatte 16. Die Länge des dritten axialen Abschnitts A3 ist also vorliegend größer als die Dicke der ersten Seitenplatte 16.

Der erste axiale Abschnitt A1 liegt somit in axialer Richtung, welche vorliegend der Querrichtung entspricht, zentral zwischen dem zweiten axialen Abschnitt A2 und dem dritten axialen Abschnitt A3. Die Innendurchmesser der axialen Abschnitte A1, A2 und A3 sind dabei gleich.

Der zweite axiale Abschnitt A2 mit dem zweiten Außendurchmesser D2 und der dritte axiale Abschnitt A3 mit dem dritten Außendurchmesser D3 bilden jeweils eine Stufe bezüglich des ersten axialen Abschnitts A1 mit dem ersten Außendurchmesser D1. Ein Teil des als Schraube 65 ausgebildeten Befestigungsmittels durchragt den ersten Lagerbolzen 51 in axialer Richtung. Dabei liegt ein Kopf 66 der Schraube 65 an der ersten Seitenplatte 16 der Verriegelungseinheit 10 an. Ein Schaft 67 der Schraube 65 durchgreift den ersten Lagerbolzen 51 und das Schlossanbindungsblech 60.

Auf der der Verriegelungseinheit 10 abgewandten Seite des Schlossanbindungsblechs 60 ist eine nicht dargestellte Mutter mit einem Innengewinde vorgesehen, in welche ein entsprechendes Außengewinde des Schafts 67 der Schraube 65 eingeschraubt ist.

Die Mutter ist vorliegend an der der Verriegelungseinheit 10 abgewandten Seite des Schlossanbindungsblechs 60 angeschweißt. Alternativ kann das Schlossanbindungsblech 60 auch einen Kragenzug aufweisen, welcher sich von der Verriegelungseinheit 10 weg erstreckt und in welchen ein Innengewinde eingebracht ist.

Der zweite Lagerbolzen 52 ist vorliegend identisch mit dem ersten Lagerbolzen 51 ausgebildet und wird ebenfalls von einem als Schraube 65 ausgebildeten Befestigungsmittel durchragt. Auch diese Schraube 65 ist in eine Mutter eingeschraubt, die auf der der Verriegelungseinheit 10 abgewandten Seite des Schlossanbindungsblechs 60 angeordnet ist, oder in ein Innengewinde eines Kragenzugs.

Die Verriegelungseinheit 10 ist somit mittels zweier Schrauben 65 mit dem Schlossanbindungsblech 60 verbunden. Die Schrauben 65 durchragen dabei auch die ersten Lageröffnungen 13 in der ersten Seitenplatte 16, die Hohlzylinder 15, die zweiten Lageröffnungen 14 in der zweiten Seitenplatte 18 und die Befestigungsöffnungen 61 in dem Schlossanbindungsblech 60.

Alternativ kann das Befestigungsmittel 65 des ersten Lagerbolzens 51 sowie des zweiten Lagerbolzens 52 auch als Niet ausgebildet sein.

Auf dem zweiten Lagerbolzen 52 ist schwenkbar ein Spannelement 40 gelagert. Dazu weist das Spannelement 40 ein vorliegend kreisrundes Spannelementloch 44 auf, welches von dem zweiten Lagerbolzen 52 durchdrungen ist. Mittels einer dritten Feder 73 ist das Spannelement 40 zu der Drehfalle 20 hin vorgespannt.

Im verriegelten Zustand, wenn das Hakenmaul 21 der Drehfalle 20 den Verriegelungsbolzen 12 aufnimmt, übt das Spannelement 40 aufgrund der Vorspannung durch die dritte Feder 73 als Sicherungselement ein schließendes Moment auf die Drehfalle 20 aus. Dazu weist das Spannelement 40 eine exzentrisch zum zweiten Lagerbolzen 52 gekrümmte Spannfläche 41 auf, welche sich in nichtselbsthemmendem Kontakt mit der Funktionsfläche 22 der Drehfalle 20 befindet. Die Spannfläche 41 ist vorliegend kreisbogenförmig gekrümmt und konvex ausgebildet.

Eine Rastklinke 30 ist auf dem zweiten Lagerbolzen 52 axial neben dem Spannelement 40 angeordnet und ebenfalls schwenkbar auf dem zweiten Lagerbolzen 52 gelagert, also mit dem Spannelement 40 fluchtend. Dazu weist die Rastklinke 30 ein vorliegend kreisrundes Rastklinkenloch 34 auf, welches von dem zweiten Lagerbolzen 52 durchdrungen ist. Mittels einer zweiten Feder 72 ist die Rastklinke 30 zu der Drehfalle 20 hin vorgespannt.

Die Rastklinke 30 ist vorliegend der ersten Seitenplatte 16 benachbart angeordnet und das Spannelement 40 ist vorliegend der zweiten Seitenplatte 18 benachbart angeordnet. Die Rastklinke 30 und das Spannelement 40 sind mit einem Leerweg auf Mitnahme gekoppelt, beispielsweise mittels einer Schlitz-Zapfen-Führung oder mittels eines axial abstehenden Mitnehmers.

Die Rastklinke 30 weist eine Rastfläche 31 auf, welche sich in Nachbarschaft zu der Spannfläche 41 des Spannelements 40 befindet. Im verriegelten Zustand ist die Rastfläche 31 beabstandet zu der Funktionsfläche 22 der Drehfalle 20 positioniert. Die Rastfläche 31 ist vorliegend kreisbogenförmig gekrümmt und konvex ausgebildet, kann aber auch eben sein.

Die Breite der Funktionsfläche 22, welche der Dicke des Grundkörpers der Drehfalle 20 entspricht, entspricht auch annähernd der Summe aus der Dicke der Rastklinke 30 und der Dicke des Spannelements 40. Die Drehfalle 20 weist also annähernd die gleiche Materialstärke auf wie die Rastklinke 30 und das Spannelement 40 zusammen.

Wenn im Crashfall die Drehfalle 20 ein öffnendes Moment erfährt und das Spannelement 40 etwas wegdrückt, gelangt die Rastfläche 31 in Anlage an die Funktionsfläche 22 der Drehfalle 20. So dient die Rastklinke 30 der Abstützung der Drehfalle 20 und verhindert als weiteres Sicherungselement eine weitere Drehung der Drehfalle 20 in Öffnungsrichtung. Damit verhindert die Rastklinke 30 ein Öffnen der Drehfalle 20.

Im verriegelten Zustand der Verriegelungseinheit 10 befindet sich der Verriegelungsbolzen 12 in der von den Seitenplatten 16, 18 gebildeten Aufnahme und im Hakenmaul 21 der geschlossenen Drehfalle 20. Das Spannelement 40 sichert durch Zusammenwirken der Spannfläche 41 mit der Funktionsfläche 22 die Drehfalle 20. Die Rastfläche 31 der Rastklinke 30 ist geringfügig von der Funktionsfläche 22 der Drehfalle 20 beabstandet.

Zum Öffnen der Verriegelungseinheit 10 wird die Rastklinke 30 von der Drehfalle 20 weg geschwenkt, wodurch sich die Rastfläche 31 der Rastklinke 30 weiter von der Funktionsfläche 22 der Drehfalle 20 entfernt. Die Rastklinke 30 nimmt das Spannelement 40 aufgrund der Mitnahmekopplung mit, so dass die Drehfalle 20 nicht länger gesichert ist.

Durch die Vorspannung aufgrund der ersten Feder 71 öffnet die Drehfalle 20, schwenkt also in Öffnungsrichtung. Alternativ oder zusätzlich zu der Vorspannung durch die erste Feder 71 kann die Drehfalle 20 zum Öffnen auch von der Rastklinke 30 oder von dem Spannelement 40 mitgenommen werden.

Aufgrund der Schwenkbewegung der Drehfalle 20 zieht sich das Hakenmaul 21 von der von den Seitenplatten 16, 18 gebildeten Aufnahme zurück und gibt den Verriegelungsbolzen 12 frei, welcher sich entgegen der Einschwenkrichtung von der Verriegelungseinheit 10 entfernt. Hat der Verriegelungsbolzen 12 das Hakenmaul 21 verlassen, so befindet sich die Verriegelungseinheit 10 im entriegelten Zustand.

Gelangt in diesem entriegelten Zustand der Verriegelungsbolzen 12 wieder in die von den Seitenplatten 16, 18 gebildete Aufnahme und in Anlage an den Rand des Hakenmauls 21, so drückt der Verriegelungsbolzen 12 die Drehfalle 20 in ihre geschlossene Stellung. Das Spannelement 40 bewegt sich aufgrund seiner Vorspannung durch die dritte Feder 73 entlang der Funktionsfläche 22. Von dem Spannelement 40 mitgenommen oder aufgrund der Vorspannung durch die zweite Feder 72 schwenkt die Rastklinke 30 auf die Drehfalle 20 zu, wobei sich die Rastfläche 31 der Funktionsfläche 22 der Drehfalle 20 nähert. Danach befindet sich die Verriegelungseinheit 10 wieder im verriegelten Zustand.

### Bezugszeichenliste

- 1: Fahrzeugsitz
- 3: Rückenlehne
- 5: Sitzteil
- 10: Verriegelungseinheit
- 12: Verriegelungsbolzen
- 13: erste Lagerbohrung
- 14: zweite Lagerbohrung
- 15: Hohlzylinder
- 16: erste Seitenplatte
- 18: zweite Seitenplatte
- 20: Drehfalle
- 21: Hakenmaul
- 22: Funktionsfläche
- 24: Drehfallenloch
- 30: Rastklinke
- 31: Rastfläche
- 34: Rastklinkenloch
- 40: Spannelement
- 41: Spannfläche
- 44: Spannelementloch
- 51: erster Lagerbolzen
- 52: zweiter Lagerbolzen
- 55: Durchgangsöffnung
- 60: Schlossanbindungsblech
- 61: Befestigungsöffnung
- 65: Befestigungsmittel, Schraube
- 66: Kopf
- 67: Schaft
- 71: erste Feder
- 72: zweite Feder
- 73: dritte Feder
- 81: flanschartige Erweiterung
- A1: erster axialer Abschnitt
- A2: zweiter axialer Abschnitt
- A3: dritter axialer Abschnitt
- D1: erster Außendurchmesser
- D2: zweiter Außendurchmesser
- D3: dritter Außendurchmesser

## Patentansprüche

1. Fahrzeugsitz (1), umfassend ein Strukturteil (3), welches ein Schlossanbindungsblech (60) aufweist, und eine an dem Schlossanbindungsblech (60) befestigte Verriegelungseinheit (10), wobei die Verriegelungseinheit (10) mindestens einen Lagerbolzen (51, 52) mit einer Durchgangsöffnung (55) aufweist, welche von einem Befestigungsmittel (65) durchragt wird, wobei der Lagerbolzen (51, 52) einen ersten axialen Abschnitt (A1) mit einem ersten Außendurchmesser (D1) und einen zweiten axialen Abschnitt (A2) mit einem zweiten Außendurchmesser (D2) aufweist, wobei der zweite Außendurchmesser (D2) kleiner ist als der erste Außendurchmesser (D1), wobei der mindestens eine Lagerbolzen (51, 52) in eine Befestigungsöffnung (61) des Schlossanbindungsblechs (60) hinein ragt, **dadurch gekennzeichnet,**
**dass** die Verriegelungseinheit (10) eine Seitenplatte (18) aufweist, welche an dem Schlossanbindungsblech (60) anliegt, und welche mindestens eine Lagerbohrung (14) umfasst, in welche der erste axiale Abschnitt (A1) eingesetzt ist, wobei um die Lagerbohrung (14) herum ein Hohlzylinder (15) angeordnet ist, welcher sich in Richtung von dem Schlossanbindungsblech (60) weg erstreckt, und welcher den ersten axialen Abschnitt (A1) zumindest teilweise umschließt.

2. Fahrzeugsitz (1) nach Anspruch 1, **dadurch gekennzeichnet, dass** der zweite axialen Abschnitt (A2) in die Befestigungsöffnung (61) des Schlossanbindungsblechs (60) hinein ragt.

3. Fahrzeugsitz (1) nach Anspruch 2, **dadurch gekennzeichnet, dass** der zweite Außendurchmesser (D2) annähernd dem Innendurchmesser der Befestigungsöffnung (61) entspricht.

4. Fahrzeugsitz (1) nach einem der Ansprüche 1 bis 3, **dadurch gekennzeichnet, dass** der Lagerbolzen (51, 52) einen dritten axialen Abschnitt (A3) mit einem dritten Außendurchmesser (D3) aufweist, welcher kleiner ist als der erste Außendurchmesser (D1).

5. Fahrzeugsitz (1) nach Anspruch 4, **dadurch gekennzeichnet, dass** der erste axiale Abschnitt (A1) in axialer Richtung zwischen dem zweiten axialen Abschnitt (A2) und dem dritten axialen Abschnitt (A3) angeordnet ist.

6. Fahrzeugsitz (1) nach einem der Ansprüche 4 bis 5, **dadurch gekennzeichnet, dass** die Innendurchmesser der axialen Abschnitte (A1, A2, A3) gleich sind.

7. Fahrzeugsitz (1) nach einem der Ansprüche 4 bis 6, **dadurch gekennzeichnet, dass** der dritte axiale Abschnitt (A3) in eine Lagerbohrung (13) in einer dem Schlossanbindungsblech (60) abgewandten Seitenplatte (16) eindringt.

8. Fahrzeugsitz (1) nach Anspruch 7, **dadurch gekennzeichnet, dass** die Länge des dritten axialen Abschnitts (A3) größer ist als die Dicke der dem Schlossanbindungsblech (60) abgewandten Seitenplatte (16).

9. Fahrzeugsitz (1) nach einem der Ansprüche 1 bis 8, **dadurch gekennzeichnet, dass** der erste axiale Abschnitts (A1) in einem zentralen Bereich eine flanschartige Erweiterung (81) aufweist, deren Außendurchmesser größer ist als der erste Außendurchmesser (D1), und dass die dem Schlossanbindungsblech (60) abgewandte Stirnseite des Hohlzylinders (15) an der flanschartigen Erweiterung (81) anliegt.

10. Fahrzeugsitz (1) nach einem der Ansprüche 1 bis 9, **dadurch gekennzeichnet, dass** eine Feder (71) ist um den Hohlzylinder (15) herum gelegt ist, welche eine Drehfalle (20) vorspannt.

11. Fahrzeugsitz (1) nach einem der vorstehenden Ansprüche, **dadurch gekennzeichnet, dass** das Befestigungsmittel (65) als Schraube (65) ausgeführt ist, welche einen Kopf (66) und einen Schaft (67) aufweist.

12. Fahrzeugsitz (1) nach Anspruch 11, **dadurch gekennzeichnet, dass** der Schaft (67) den Lagerbolzen (51) und das Schlossanbindungsblech (60) durchgreift.

## Claims

1. Vehicle seat (1) comprising a structural component (3) which has a lock connection sheet (60) and a locking unit (10) which is secured to the lock connection sheet (60), wherein the locking unit (10) has at least one bearing pin (51, 52) having a through-opening (55) through which a securing means (65) protrudes, wherein the bearing pin (51, 52) has a first axial portion (A1) having a first outer diameter (D1) and a second axial portion (A2) having a second outer diameter (D2), wherein the second outer diameter (D2) is smaller than the first outer diameter (D1), wherein the at least one bearing pin (51, 52) protrudes into a securing opening (61) of the lock connection sheet (60),
**characterized in that**
the locking unit (10) has a side plate (18) which is in abutment with the lock connection sheet (60) and which comprises at least one bearing hole (14) in which the first axial portion (A1) is inserted, wherein there is arranged around the bearing hole (14) a hollow cylinder (15) which extends in the direction away from the lock connection sheet (60) and which at least partially surrounds the first axial portion (A1).

2. Vehicle seat (1) according to Claim 1, **characterized in that** the second axial portion (A2) protrudes into the securing opening (61) of the lock connection sheet (60) .

3. Vehicle seat (1) according to Claim 2, **characterized in that** the second outer diameter (D2) substantially corresponds to the inner diameter of the securing opening (61).

4. Vehicle seat (1) according to one of Claims 1 to 3, **characterized in that** the bearing pin (51, 52) has a third axial portion (A3) having a third outer diameter (D3) which is smaller than the first outer diameter (D1) .

5. Vehicle seat (1) according to Claim 4, **characterized in that** the first axial portion (A1) is arranged in an axial direction between the second axial portion (A2) and the third axial portion (A3).

6. Vehicle seat (1) according to either of Claims 4 or 5, **characterized in that** the inner diameters of the axial portions (A1, A2, A3) are identical.

7. Vehicle seat (1) according to one of Claims 4 to 6, **characterized in that** the third axial portion (A3) protrudes into a bearing hole (13) in a side plate (16) which faces away from the lock connection sheet (60).

8. Vehicle seat (1) according to Claim 7, **characterized in that** the length of the third axial portion (A3) is greater than the thickness of the side plate (16) which faces away from the lock connection sheet (60).

9. Vehicle seat (1) according to one of Claims 1 to 8, **characterized in that** the first axial portion (A1) has in a central region a flange-like expansion (81) whose outer diameter is greater than the first outer diameter (D1), and **in that** the end face of the hollow cylinder (15) facing away from the lock connection sheet (60) is in abutment with the flange-like expansion (81).

10. Vehicle seat (1) according to one of Claims 1 to 9, **characterized in that** a spring (71) which pretensions a rotary latch (20) is placed around the hollow cylinder (15) .

11. Vehicle seat (1) according to one of the preceding claims, **characterized in that** the securing means (65) is constructed as a screw (65) which has a head (66) and a shaft (67).

12. Vehicle seat (1) according to Claim 11, **characterized in that** the shaft (67) engages through the bearing pin (51) and the lock connection sheet (60) .

## Revendications

1. Siège de véhicule (1), comprenant une partie de structure (3), qui présente une tôle de montage de serrure (60), et une unité de verrouillage (10) fixée à la tôle de montage de serrure (60), dans lequel l'unité de verrouillage (10) présente au moins un axe de palier (51, 52) avec une ouverture de passage (55), qui est traversée par un moyen de fixation (65), dans lequel l'axe de palier (51, 52) présente une première partie axiale (A1) avec un premier diamètre extérieur (D1) et une deuxième partie axiale (A2) avec un deuxième diamètre extérieur (D2), dans lequel le deuxième diamètre extérieur (D2) est plus petit que le premier diamètre extérieur (D1), dans lequel ledit au moins un axe de palier (51, 52) pénètre dans une ouverture de fixation (61) de la tôle de montage de serrure (60), **caractérisé en ce que** l'unité de verrouillage (10) présente une plaque latérale (18), qui est appliquée sur la tôle de montage de serrure (60), et qui comprend au moins un alésage de palier (14), dans lequel la première partie axiale (A1) est engagée, dans lequel autour de l'alésage de palier (14) est disposé un cylindre creux (15), qui s'étend dans la direction opposée à la tôle de montage de serrure (60) et qui entoure au moins en partie la première partie axiale (A1).

2. Siège de véhicule (1) selon la revendication 1, **caractérisé en ce que** la deuxième partie axiale (A2) pénètre dans l'ouverture de fixation (61) de la tôle de montage de serrure (60).

3. Siège de véhicule (1) selon la revendication 2, **caractérisé en ce que** le deuxième diamètre extérieur (D2) correspond approximativement au diamètre intérieur de l'ouverture de fixation (61).

4. Siège de véhicule (1) selon l'une quelconque des revendications 1 à 3, **caractérisé en ce que** l'axe de palier (51, 52) présente une troisième partie axiale (A3) avec un troisième diamètre extérieur (D3), qui est plus petit que le premier diamètre extérieur (D1).

5. Siège de véhicule (1) selon la revendication 4, **caractérisé en ce que** la première partie axiale (A1) est disposée en direction axiale entre la deuxième partie axiale (A2) et la troisième partie axiale (A3).

6. Siège de véhicule (1) selon une des revendications 4 à 5, **caractérisé en ce que** les diamètres intérieurs des parties axiales (A1, A2, A3) sont égaux.

7. Siège de véhicule (1) selon l'une quelconque des revendications 4 à 6, **caractérisé en ce que** la troisième partie axiale (A3) pénètre dans un alésage de palier (13) dans une plaque latérale (16) détournée de la tôle de montage de serrure (60).

8. Siège de véhicule (1) selon la revendication 7, **caractérisé en ce que** la longueur de la troisième partie axiale (A3) est plus grande que l'épaisseur de la plaque latérale (16) détournée de la tôle de montage de serrure (60) .

9. Siège de véhicule (1) selon l'une quelconque des revendications 1 à 8, **caractérisé en ce que** la première partie axiale (A1) présente dans une région centrale un élargissement en forme de bride (81), dont le diamètre extérieur est plus grand que le premier diamètre extérieur (D1), et **en ce que** le côté frontal du cylindre creux (15) détourné de la tôle de montage de serrure (60) est appliqué sur l'élargissement en forme de bride (81).

10. Siège de véhicule (1) selon l'une quelconque des revendications 1 à 9, **caractérisé en ce qu'**un ressort (71) est installé autour du cylindre creux (15), et précontraint un pêne demi-tour (20).

11. Siège de véhicule (1) selon l'une quelconque des revendications précédentes, **caractérisé en ce que** le moyen de fixation (65) est formé par une vis (65), qui présente une tête (66) et une tige (67).

12. Siège de véhicule (1) selon la revendication 11, **caractérisé en ce que** la tige (67) traverse l'axe de palier (51) et la tôle de montage de serrure (60).
